# EUROPÄISCHE PATENTSCHRIFT

(11) **EP 2 980 565 B1**
(45) Veröffentlichungstag und Bekanntmachung des Hinweises auf die Patenterteilung: **09.06.2021**
(21) Anmeldenummer: 15174787.0
(22) Anmeldetag: 01.07.2015
(51) Int. Cl.: G01N 23/223

(54) **HANDGERÄT ZUR RÖNTGENFLOURESZENZANALYSE**
HANDHELD INSTRUMENT FOR X-RAY FLUORESCENCE ANALYSIS
APPAREIL PORTATIF DESTINÉ À L'ANALYSE PAR FLUORÉSCENCE À RAYONS-X

(30) Priorität: 01.08.2014 DE 102014110991; 22.10.2014 DE 102014115383
(43) Veröffentlichungstag der Anmeldung: 03.02.2016
(73) Patentinhaber: Helmut Fischer GmbH Institut für Elektronik und Messtechnik., 71069 Sindelfingen (DE)
(72) Erfinder: Geier, Udo, 71063 Sindelfingen (DE); Nensel, Bernhard, 76135 Karlsruhe (DE)
(74) Vertreter: Mammel und Maser

(56) Entgegenhaltungen:
- WO-A2-2013/052556
- CN-A- 103 364 425
- CN-Y- 201 340 400
- JP-A- 2012 229 967
- US-A1- 2009 057 422
- US-A1- 2013 022 166
- Anonymous: "Delta catalog: Portable XRF Analyzers - DELTA Handheld X-ray Fluorescence", , 31 December 2013 (2013-12-31), pages 1-5, XP55378264, Retrieved from the Internet: URL:http://bcminingproperties.com/ASSESSME NT REPORTS AND FILES/XRF DOCS/DELTA_Product_Line_201305_EN_LOW.pdf [retrieved on 2017-06-02]

## Beschreibung

Die Erfindung betrifft ein Handgerät sowie eine mobile Einrichtung zur Röntgenfluoreszenzanalyse.

In vielen Bereichen der industriellen Fertigung ist es erforderlich, Beschichtungen auf Gegenständen zu analysieren und/oder deren Schichtdicke berührungslos zu erfassen. Hierfür ist allgemein bekannt, ein Röntgenfluoreszenzverfahren einzusetzen. Dabei wird von einer Strahlungsquelle ein Primärstrahl auf das Messobjekt gerichtet. Eine von der Messoberfläche des Messobjektes emittierte Sekundärstrahlung wird von einem Detektor erfasst und an eine Auswerteeinheit weitergeleitet, um beispielsweise die Schichtdicke und/oder deren Elementenkonzentrationen zu bestimmen.

Zur Durchführung eines Röntgenfluoreszenzverfahrens werden bislang sogenannte Tischgeräte eingesetzt, welche aufgrund deren Größe und Gewicht an einem bestimmten Ort dauerhaft aufgestellt wurden.

Des Weiteren ist aus der US 2011/0142200 A1 ein Handgerät mit einer Röntgenmesseinrichtung zur Durchführung der Röntgenfluoreszenzanalyse bekannt, welches zur Positionierung des Handgerätes auf einem Messgegenstand nahe eines Austrittsfensters für den Primärstrahl einen Vorsprung umfasst, der zur Auflage auf dem Messgegenstand dient und gleichzeitig als Kollimator ausgebildet ist. Ein solches Handgerät weist den Nachteil auf, dass dadurch keine exakte und definierte Positionierung des Handgeräts zum Messobjekt ermöglicht ist.

Aus der US 2013/0022166 A1 ist ein Handgerät mit einer Röntgenmesseinrichtung zur Durchführung der Röntgenfluoreszenzanalyse bekannt. Hierbei handelt es sich um ein Handgerät, welches an einer Stirnseite ein Austrittsfenster für den Primärstrahl umfasst. Dieses Austrittsfenster ist von einem Halterahmen umgeben, an den sich benachbart eine Stirnfläche anschließt, um die Stirnseite des Handgerätes zu bilden. Das Handgerät wird durch den Benutzer durch Ausrichten des Handgerätes zur Oberfläche des Messobjektes positioniert. Dadurch ist eine exakte Einnahme oder definierte Positionierung des Handgerätes zum Messobjekt nicht ermöglicht. Diese Vorrichtung ist auch aus einem Delta Katalog Portable XRF Analyzers - DELTA Handheld X-ray Fluorescence, 213, XP55378264, Gefunden im Internet: http://bcminingproperties.com/ASSESSMENT REPORTS AND FILES/XRF DOCS/DELTA_Product.Line:201305_EN_LOW.pdf der Firma Olympus bekannt. Aus Seite 7 geht hervor, dass für dieses Handgerät eine Vielzahl von Zubehör erhältlich ist. Unter anderem ein Standfuß, der an einem Handgriff des Handgerätes befestigbar ist, so dass mit Hilfe des zusätzlich am Handgriff montierbaren Standfuß das Messgerät einen selbständigen Stand zur Messoberfläche einnehmen kann.

Analoge Handgeräte gehen aus der CN 201340400 Y und der JP 2012 229967 A hervor.

Der Erfindung liegt die Aufgabe zugrunde, ein Handgerät zur Röntgenfluoreszenzanalyse mit einer Röntgenfluoreszenzmesseinrichtung vorzuschlagen, welches eine einfache und sichere Handhabung des Handgeräts ermöglicht.

Diese Aufgabe wird erfindungsgemäß durch ein Handgerät zur Röntgenfluoreszenzanalyse bestehend aus einem Gehäuse mit einem Handgriff und einer in dem Gehäuse angeordneten Röntgenfluoreszenzmesseinrichtung gelöst, bei welchem an einem stirnseitigen Ende eines ersten Gehäuseabschnitts des Gehäuses das Austrittsfenster vorgesehen ist und diesem Austrittsfenster zugeordnet zumindest ein Positionierelement am ersten Gehäuseabschnitt vorgesehen ist und an zumindest einem weiteren Gehäuseabschnitt des Gehäuses beabstandet zum Austrittsfenster zumindest ein Auflageelement vorgesehen ist und das Handgerät nach dem Aufsetzen auf die Messoberfläche des Messgegenstandes durch das zumindest eine Positionierelement und das zumindest eine Auflageelement zur Messoberfläche ausgerichtet ist und selbstständig eine Messposition zur Messoberfläche einnimmt und die Messposition des Handgeräts zur Messoberfläche aufrecht erhält. Dadurch wird eine definierte Messposition auf dem Messgegenstand durch das Handmessgerät ohne zusätzliche separate Hilfsmittel eingenommen. Gleichzeitig nimmt das Handgerät selbständig eine stabile Lage ein. Beeinträchtigungen während der Messung durch Veränderung der Lage und/oder des Winkels des Messgerätes zur Messoberfläche sind dadurch beseitigt. Zusätzliche Adapter oder Aufsätze für das Handgerät sind dadurch nicht erforderlich, da nach dem Aufsetzen des Handgeräts auf der Messoberfläche des Messgegenstandes das Handgerät selbstständig auf der Messoberfäche steht und zu dieser ausgerichtet bleibt.

Ein Positionierelement und zwei Auflageelemente oder zwei Positionierelemente und ein Auflageelement bilden eine Dreipunktauflage. Dadurch kann eine stabile Anordnung und Auflage des Handgerätes auf der Messoberfläche erfolgen. Beispielsweise kann das eine Positionierelement als eine Fläche ausgebildet sein, welche sich um das Austrittsfenster erstreckt. Die zwei Auflageelemente können dann in Form eines Standfußes oder als Prisma oder als zwei zueinander beabstandete Auflagepunkte, insbesondere halbkugelförmig oder dergleichen, ausgebildet und am zweiten Gehäuseabschnitt vorgesehen sein. Die Anordnung und Ausgestaltung der Positionierelemente und Auflageelemente zur Bildung einer Dreipunktauflage können auch vertauscht sein. Grundsätzlich können alternativ auch mehrere Positionierelemente und/oder Auflageelemente zur Bildung einer selbsthaltenden Auflage für das Handgerät vorgesehen sein.

An dem ersten Gehäuseabschnitt ist der Handgriff vorgesehen, und der eine weitere Gehäuseabschnitt ist mit dem ersten Gehäuseabschnitt verbunden. Dadurch kann ermöglicht sein, dass die Auflageelemente an dem weiteren Gehäuseabschnitt angeordnet sind und der zweite Gehäuseabschnitt unmittelbar mit dem ersten Gehäuseabschnitt oder mit dem Handgriff verbunden ist, um ein kompaktes Gehäuse, insbesondere ein eigenständiges Gehäuse, auszubilden.

Des Weiteren sind bevorzugt zum Austrittsfenster benachbart oder daran angeordnet ein Auflageelement als Auflagefläche und vorzugsweise die am weiteren Gehäuseabschnitt angeordneten Auflageelemente als Aufsetzfüße oder Aufsetzprismen ausgebildet. Dies ermöglicht, dass die Röntgenfluoreszenzmesseinrichtung aufgrund der definierten Auflagefläche, welche vorzugsweise das Austrittsfenster teilweise oder vollständig umgibt, nur einmalig bezüglich einer Messebene kalibriert werden muss, da die Messebene immer in der Auflagefläche liegt, welche das Austrittsfenster umgibt und die Auflagefläche auf der Messoberfläche aufliegt. Des Weiteren ist der Vorteil gegeben, dass bei kleineren Messgegenständen diese in einfacher Weise auf die Auflagefläche zur Durchführung der Messung aufgelegt werden können. Sofern für größere Messgegenstände eine Röntgenfluoreszenzanalyse der Oberfläche des Messgegenstandes durchgeführt werden soll, kann das gesamte Handgerät darauf aufgesetzt werden.

Der erste Gehäuseabschnitt und der Handgriff sind pistolenförmig ausgebildet. Der zweite Gehäuseabschnitt ist insbesondere in Form eines Magazins an dem ersten Gehäuseabschnitt angeordnet, so dass eine kompakte und handhabbare Einheit für ein solches Handgerät geschaffen ist. In dem zweiten Gehäuseabschnitt ist bevorzugt zumindest teilweise die Röntgenfluoreszenzmesseinrichtung angeordnet. Bevorzugt ist des Weiteren vorgesehen, dass der erste Gehäuseabschnitt rohrförmig, bauchig, kastenförmig oder dergleichen ausgebildet ist.

Des Weiteren ist bevorzugt die Austrittsrichtung der Primärstrahlung senkrecht zur Auflagefläche ausgerichtet. Ein Detektor der Röntgenfluoreszenzmesseinrichtung ist derart zum Austrittsfenster positioniert, dass die emittierte Sekundärstrahlung benachbart zum Primärstrahl, welcher in das Gehäuse eintritt, erfasst werden kann. Alternativ kann der Primärstrahl auch unter einem spitzen Winkel zur Auflageebene aus dem Austrittsfenster austreten.

Des Weiteren sind benachbart zu den Auflageelementen oder an den Auflageelementen selbst Befestigungselemente vorgesehen, welche zur Fixierung des Handgerätes an einer Aufnahme des Transportbehälters oder eines Messtisches im Transportbehälter dienen. Beispielsweise kann dadurch eine einfache Steck-, Klemm-, Schraubverbindung geschaffen werden. Zudem können die Befestigungselemente und die Auflageelemente beim Fixieren des Handgeräts an der Aufnahme zusammen wirken, um eine definierte Ausrichtung des Handgerätes zum Messtisch zu erzielen.

Das Handgerät nimmt bevorzugt im Handgriff zumindest einen Akkumulator auf. Dieser ist austauschbar und vorzugsweise wieder aufladbar.

Eine weitere bevorzugte Ausgestaltung des Handgeräts sieht an einem dem Austrittsfenster zum Austritt der Röntgenstrahlung gegenüber liegenden Ende des ersten Gehäuseabschnitts oder des Gehäuses eine Anzeige zur Ausgabe von Betriebsdaten vor. Dadurch kann der Benutzer unmittelbar bei der Durchführung einer Messung einzelne Messdaten verfolgen beziehungsweise Einstellungen überwachen.

Des Weiteren ist bevorzugt vorgesehen, dass die in dem Gehäuse angeordnete Datenverarbeitungseinrichtung eine Funkschnittstelle zur kabellosen Kommunikation mit einer getrennt zum Handgeräte vorgesehenen Datenverarbeitungseinrichtung, insbesondere einem PC, einem Tablet, einem Smartphone oder dergleichen, ansteuert. Dadurch kann eine flexible und einfache Handhabung des Handgerätes getrennt von einem Transportbehälter oder einer Messoberfläche des Messgegenstandes zugeordnet erfolgen, um das Handgerät anzusteuern und/oder die erfassten Messdaten zur Kenntnis zu nehmen, auszuwerten oder dergleichen.

Des Weiteren ist bevorzugt vorgesehen, dass die Datenverarbeitungseinrichtung im Handgerät mittels einer Fernsteuerung ansteuerbar ist. Dadurch kann der Benutzer entfernt von dem Messort das Handgerät zur Durchführung einer Messung ansteuern. Dies kann beispielsweise dann erforderlich werden, wenn das Handgerät in einem abgeschlossenen Raum aufzustellen ist und der Benutzer sich während der Messung außerhalb dieses Raumes befinden muss. Gleiches kann für die Messung in einem Transportbehälter gelten, ohne dass dabei erforderlich ist, dass das Handgerät über Kabelverbindungen mit der Steuerungs- und/oder Datenverarbeitungseinrichtung des Transportbehälters verbunden ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht eines nicht zur Erfindung gehörenden Transportbehälters einer mobilen Einrichtung zur Röntgenfluoreszenzanalyse,
Figur 2 eine perspektivische Ansicht eines Handgerätes mit einer Röntgenfluoreszenzmesseinrichtung,
Figur 3 eine perspektivische Ansicht der nicht zur Erfindung gehörenden mobilen Einrichtung in einer Gebrauchsposition als Tischgerät,
Figur 4 eine perspektivische Ansicht der nicht zur Erfindung gehörenden mobilen Einrichtung in einer weiteren Gebrauchsposition während einer Messung,
Figur 5 eine perspektivische Ansicht einer weiteren Gebrauchsposition der nicht zur Erfindung gehörenden mobilen Einrichtung gemäß Figur 1 zur Entnahme des Handgeräts,
Figur 6 eine weitere schematische Ansicht der Gebrauchsposition der nicht zur Erfindung gehörenden mobilen Einrichtung gemäß Figur 5 bei der Entnahme des Handgeräts,
Figur 7 eine schematische Ansicht in einer weiteren Gebrauchsposition der nicht zur Erfindung gehörenden mobilen Einrichtung bei der Entnahme des Handgeräts,
Figur 8 eine schematische Ansicht von vorne auf die Gebrauchsposition gemäß Figur 7,
Figuren 9a und 9b schematische Detailansichten zur Fixierung des Handgeräts an der nicht zur Erfindung gehörenden mobilen Einrichtung,
Figur 10 eine schematische Seitenansicht im Teilschnitt des nicht zur Erfindung gehörenden Transportbehälters in Figur 1 und
Figur 11 eine schematische Ansicht des Handgeräts im Einsatz auf einer Messoberfläche eines Messgegenstandes.

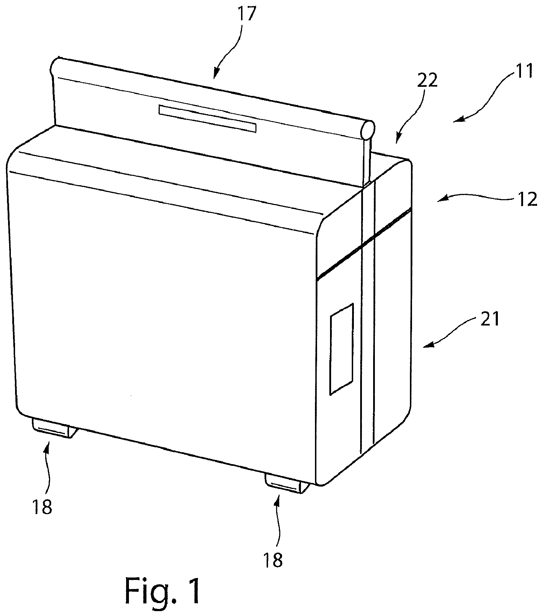

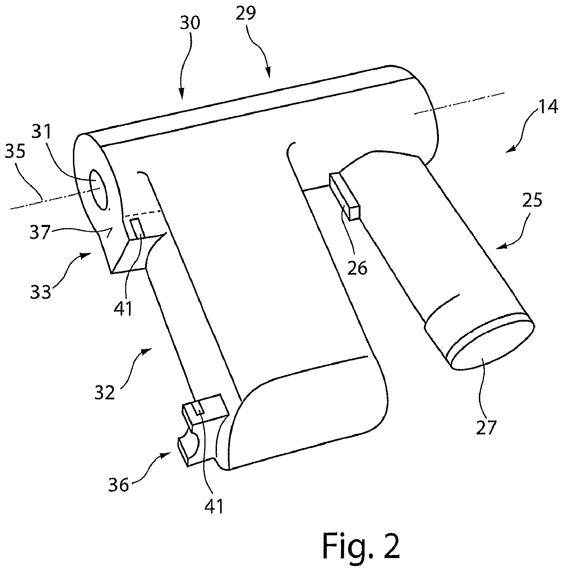

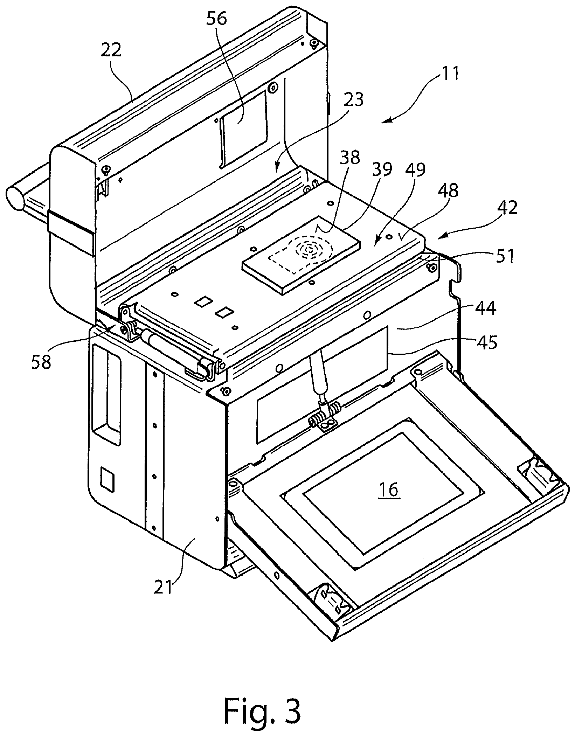

In Figur 1 ist perspektivisch eine mobile Einrichtung 11 zur Röntgenfluoreszenzanalyse in einem Transportzustand dargestellt. Diese mobile Einrichtung 11 besteht aus einem Transportbehälter 12, der in einer geschlossenen Position in Figur 1 dargestellt ist und einem Handgerät 14, welches perspektivisch in Figur 2 dargestellt ist. Des Weiteren umfasst die mobile Einrichtung 11 zur Röntgenfluoreszenzanalyse zumindest eine Datenverarbeitungseinrichtung, die nicht näher dargestellt ist, sowie ein Display 16, welches beispielsweise in Figur 3 dargestellt ist. Dieses Display 16 kann auch Teil einer Datenverarbeitungseinrichtung, wie beispielsweise einem Computer, einem Tablet oder dergleichen, sein, welches auch abnehmbar vom Transportbehälter 12 sein kann. Ebenso kann vorgesehen sein, dass die Datenverarbeitungseinrichtung in dem Transportbehälter 12 vorgesehen ist und lediglich ein Anzeigegerät, insbesondere ein Display, von dem Transportbehälter 12 abnehmbar ist, wobei die Datenübertragung vorzugsweise kabellos erfolgt.

Der Transportbehälter 12 ist koffer- oder kastenförmig mit einem Haltegriff 17 ausgebildet. Dieser Transportbehälter 12 umfasst Standfüße 18 zur stabilen und festen Auflage des Transportbehälters 12 auf einem Untergrund.

Der Transportbehälter 12 umfasst ein Unterteil 21 sowie einen Deckel 22, der in Figur 1 in einer Schließposition und in Figur 3 in einer geöffneten Position dargestellt ist. Bevorzugt ist der Deckel 22 über ein Scharnier 23 (Figur 3) mit dem Unterteil 21 verbunden. Alternativ kann dieser auch vollständig abnehmbar sein.

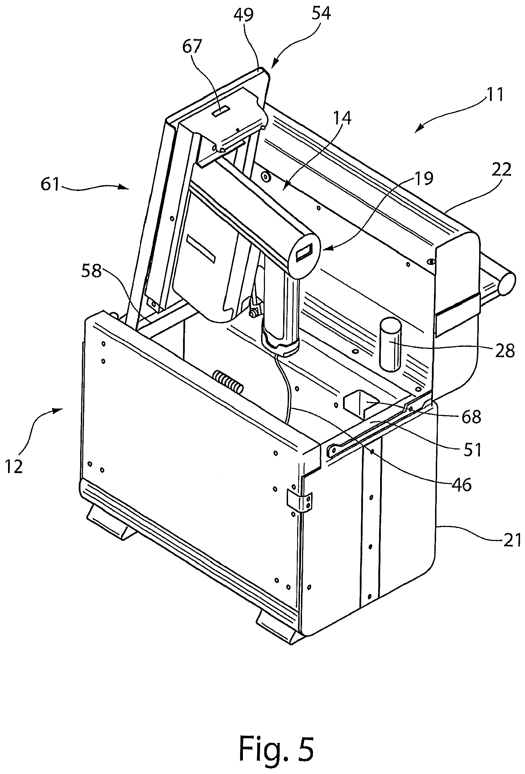

In einen Innenraum des Transportbehälters 12 ist das in Figur 2 dargestellte Handgerät 14 angeordnet und kann aus diesem vollständig entnommen werden. Das Handgerät 14 umfasst einen Handgriff 25, beispielsweise mit einer Bedientaste 26. In dem Handgriff 25 kann über einen abnehmbaren Verschluss 27 ein Akkumulator 28 (Figur 5) in den Handgriff 25 einsetzbar sein. Der Handgriff 25 ist mit einem ersten Gehäuseabschnitt 30 des Gehäuses 28 verbunden, welches an einem Ende ein Austrittsfenster 31 aufweist, aus welchem eine Primärstrahlung austritt. Benachbart zum Austrittsfenster 31 ist an dem ersten Gehäuseabschnitt 30 ein weiterer Gehäuseabschnitt 32, insbesondere in Form eines Magazins vorgesehen. In diesem Gehäuseabschnitt 32 sowie zumindest teilweise in dem Gehäuseabschnitt 30 ist eine Röntgenfluoreszenzmesseinrichtung vorgesehen, welche eine Strahlungsquelle zur Ausgabe des Primärstrahls sowie einen Detektor zur Erfassung einer von einer Messoberfläche 38 emittierten Sekundärstrahlung und eine Auswerteeinrichtung umfasst. An einer Oberseite des ersten Gehäuseabschnitts 30 kann ein Schieber vorgesehen sein, durch welchen das Austrittsfenster 31 verschließbar ist.

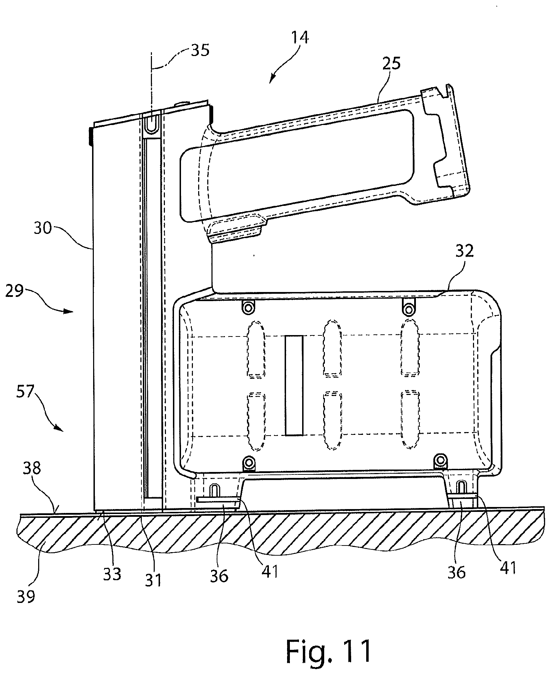

Eine Austrittsrichtung der Primärstrahlung liegt vorteilhafterweise in einer Längsachse 35 des ersten Gehäuseabschnitts 30. In einer Ebene rechtwinklig dazu sind bevorzugt Positionierelemente 33 am ersten Gehäuseabschnitt 30 vorgesehen. Des Weiteren ist an dem zweiten Gehäuseabschnitt 32 zumindest ein Auflageelement 36 vorgesehen. Die Auflageflächen oder Berührflächen des zumindest einen Positionierelementes 33 und des zumindest einen Auflageelementes 36 können in einer gemeinsamen Ebene liegen, um das Handgerät 14 bei einem mobilen Einsatz unmittelbar vor Ort auf eine Messoberfläche 38 eines Messgegenstandes 39 aufzusetzen, wie dies in Figur 11 dargestellt ist. Bevorzugt sind das zumindest eine Positionierelement 33 und das zumindest eine Auflageelement 36 als Dreipunkt-Auflage ausgebildet. Das Positionierelement 33, welches dem Austrittsfenster 31 zugeordnet ist, wird beispielsweise durch eine Auflagefläche 37 gebildet, welche bündig zum Austrittsfenster 31 ist. Alternativ kann das Austrittsfenster 31 auch gegenüber der Auflagefläche 37 bzw. dem zumindest einen Positionierelement 33 geringfügig in Richtung des Gehäuseabschnitts 30 zurück versetzt sein, wobei vorzugsweise ein vorbestimmter Abstand festgelegt wird, so das der Abstand der Messoberfläche 38 und der Röntgenfluoreszenzeinrichtung, insbesondere eines Kollimators und/oder Detektors, festgelegt ist. Die weiteren an dem weiteren Gehäuseabschnitt 32 angeordneten Auflageelemente 36 sind bevorzugt als zwei Aufsetzfüße ausgebildet, welche vorzugsweise dazwischen liegend eine prismenförmige Geometrie aufweisen, so dass auch beim Aufsetzen des Handgerätes 14 auf ein Rohr oder eine gekrümmte Oberfläche eine Zentrierung und/oder Positionierung des Handgerätes 14 über diese prismenförmige Auflage der am Gehäuseabschnitt 32 angeordneten Auflageelemente 36 erfolgen kann und die Auflagefläche 37 nur linienförmig am höchsten Punkt der rohrförmigen oder gekrümmten Messoberfläche aufliegt. Alternativ kann auch das zumindest eine Positionierelement 33 ein Auflageprisma oder beabstandete Auflagepunkte aufweisen und das Auflageelement 36 als punktförmige oder flächenförmige als auch prismenförmige Auflage vorgesehen sein.

Das Handgerät 14 kann eine Position einnehmen, wie diese in Figur 11 dargestellt ist. Das Handgerät 14 ist selbsthaltend zur Messoberfläche 38 angeordnet und nimmt seine Messposition 57 selbstständig ein. Die Auflageelemente 36 sind bevorzugt zueinander beabstandet, um über eine solche Dreipunkt-Auflage eine vorbestimmte Ausrichtung der Längsachse 35 des ersten Gehäuseabschnitts 30 und somit einer aus dem Austrittsfenster 31 austretenden Primärstrahlung sicherzustellen. Benachbart zu dem zumindest einen Positionselement 33 und/oder dem zumindest einen Auflageelement 36 sind Befestigungselemente 41 an dem Gehäuse 29 oder den Gehäuseabschnitten 30, 32 vorgesehen, deren Funktion nachfolgend anhand der Figuren 5 bis 7 näher beschrieben werden.

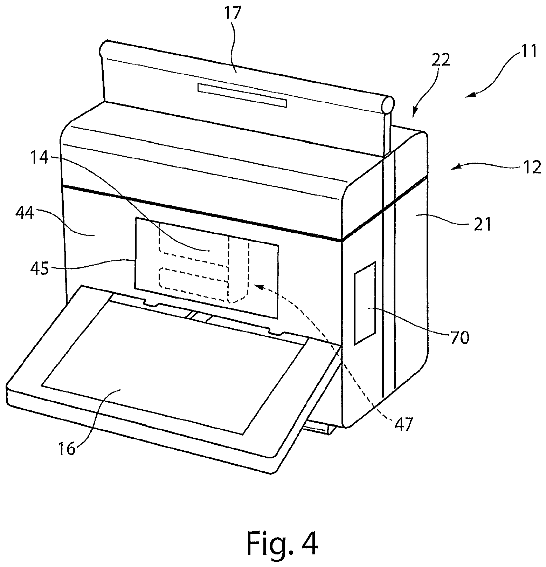

In Figur 3 und 4 ist die mobile Einrichtung 11 zur Röntgenfluoreszenzanalyse in einer ersten Anwendung als Tischgerät dargestellt.

An einer Vorderseite des Transportbehälters 12 ist das Display 16 beziehungsweise eine Datenverarbeitungseinrichtung mit dem Display 16, wie beispielsweise ein abnehmbares Tablet, vorgesehen, welches aus einer Nichtgebrauchsposition gemäß Figur 1 in eine in Figur 3 und 4 dargestellte Gebrauchsposition ausklappbar ist. Beispielsweise ist das Display 16 um eine horizontale Schwenkachse, wie in Figur 3 und 4 dargestellt, herausschwenkbar. Die Schwenkachse kann auch an einem oberen oder unteren Ende vorgesehen sein. Ebenso kann auch eine vertikale Schwenkachse in einem Eckbereich der Seitenfläche des Transportbehälters vorgesehen sein. Ein Aufnahmeraum für das Display 16 oder die Datenverarbeitungseinrichtung am Transportbehälter 12 ist durch eine Trennwand 44 zum Innenraum des Transportbehälters 12 getrennt. Diese Trennwand 44 kann ein Fenster 45 aufweisen, welches transparent ausgebildet ist, um optisch überprüfen zu können, dass das Handgerät 14 in einer Verstaulage 47 im Unterteil 21 des Transportbehälters 12 angeordnet ist.

Zur Durchführung einer Messung an einem Messgegenstand 39 wird der Deckel 22 geöffnet, so dass der Messgegenstand 39 auf einen Messtisch 48, der Teil einer Aufnahme 49 ist, aufgelegt werden kann. Diese Aufnahme 49 weist eine plane Ebene auf und ist bevorzugt als Platte ausgebildet, welche an einem oberen Rand 51 des Unterteils 21 aufliegt und vorzugsweise vollständig oder zumindest teilweise abnehmbar ist. In der Aufnahme 49 ist eine Durchbrechung 52 vorgesehen. An einer dem Messtisch 48 gegenüber liegenden Seite der Aufnahme 49 ist das Handgerät 14 mit einer in den Figuren 5 bis 8 dargestellten Halterung 54 zur Durchbrechung 52 befestigt, so dass ein Austrittsfenster 31 des Handgeräts 14 unmittelbar der Durchbrechung 52 zugeordnet ist. Bei der Positionierung der Aufnahme 49 in einer Gebrauchsposition 42 und des Handgeräts 14 in der Verstaulage 47 ist das Handgerät 14 im Innenraum des Unterteils 21 vorgesehen und vollständig durch das Unterteil 21 und die Aufnahme 49 umschlossen. Es kann dadurch eine Messung auf einer Messoberfläche 38 des Messgegenstandes 39 erfolgen, welche mit der Messoberfläche 38 auf dem Messtisch 48 zugewandt aufliegt. Ein auf den Messtisch 48 aufliegender Messgegenstand 39 wird derart positioniert, dass seine Messoberfläche 38 im Bereich der Durchbrechung 52 liegt oder diese überdeckt.

Auf einer Innenseite des Deckels 12 ist ein Absorptionselement 56 vorgesehen, welches bei einem geschlossenen Deckel 22 in einer Strahlachse einer Röntgenstrahlung liegt, welche durch die Durchbrechung 52 durchtritt, um eine gegebenenfalls durch die Durchbrechung 52 austretende Röntgenstrahlung zu absorbieren.

Das Handgerät 14 und die Datenverarbeitungseinrichtung arbeiten vorzugsweise drahtlos, so dass die durch die Röntgenmesseinrichtung erfassten Signale mittels deren Auswerteeinheit ausgewertet und an die Datenverarbeitungseinrichtung zur Aufbereitung und Ausgabe der erfassten Werte weitergeleitet werden. Zur Durchführung einer Messung wird nach dem Auflegen des Messgegenstandes 39 auf der Aufnahme 49 und Ausrichtung zur Durchbrechung 52 der Deckel 22 geschlossen. Dabei wird ein Signal an die Röntgenfluoreszenzeinrichtung übertragen, so dass eine Messung freigegeben und gestartet werden kann. Das in dem Unterteil 21 angeordnete Handgerät 14 kommuniziert entweder drahtlos mit der Datenverarbeitungseinrichtung oder zwischen dem Handgerät 14 und der Datenverarbeitungseinrichtung ist eine Kabelverbindung vorgesehen, wie dies beispielsweise in Figur 5 schematisch durch das Datenübertragungskabel 46 dargestellt ist. Über das Display 16 können einzelnen Parameter oder Vorgaben zur Durchführung der Messung eingegeben und die Messung durch den Benutzer gestartet werden. Nach der Durchführung der Messung wird in entsprechenden Diagrammen das Messergebnis ausgegeben. Sobald der Deckel 22 zur Entnahme des Messgegenstandes 39 abgehoben wird, erfolgt automatisch eine Sperrung der Röntgenfluormesseinrichtung im Handgerät 14, so dass nicht versehentlich eine Primärstrahlung aus dem Handgerät 14 ausgesendet wird.

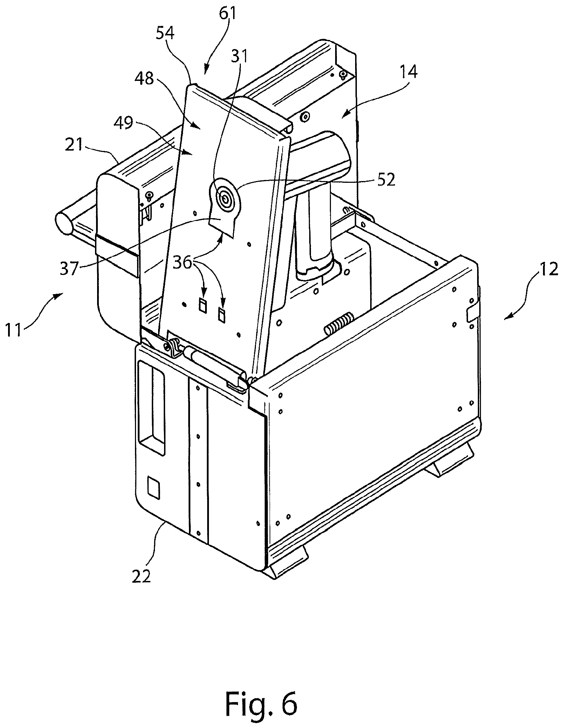

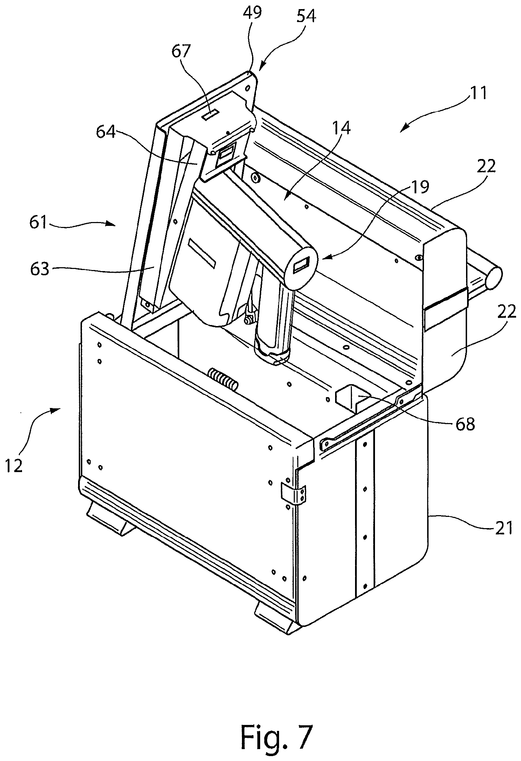

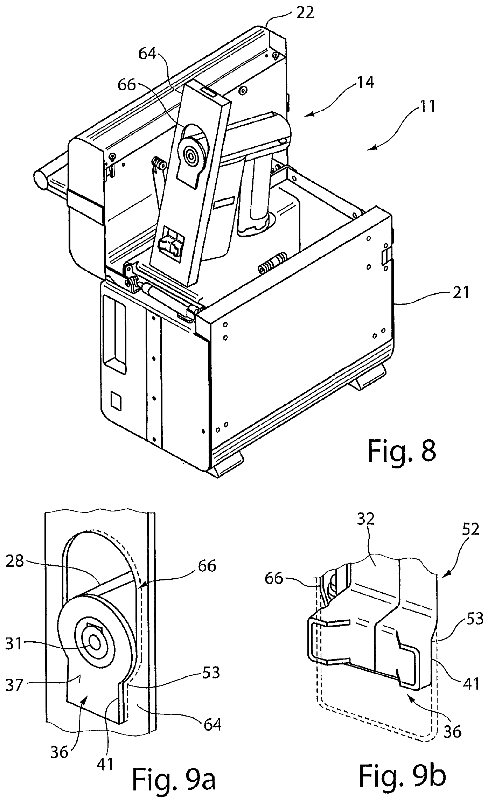

In den Figuren 3, 5 bis 9 ist eine Abfolge von Arbeitsschritten dargestellt, um das Handgerät 14 aus seiner Verstaulage 47 in eine Gebrauchsposition 57 überzuführen, bei der das mobile Handgerät 14 unmittelbar auf dem Messgegenstand 39 gemäß Figur 11 aufgesetzt und zu dem Messgegenstand 39 positioniert wird. Figur 6 zeigt eine analoge Anordnung zu Figur 8, wobei in Figur 8 die Aufnahme 49 nicht dargestellt ist. Die Aufnahme 49 ist bevorzugt über eine Gelenkverbindung 58 an einer Längs- oder Schmalseite mit dem Transportbehälter 12, vorzugsweise dem Unterteil 21, verbunden, so dass durch eine Schwenkbewegung die Aufnahme 49 aus einer Verstaulage 47 gemäß Figur 3 in eine Entnahmeposition 61 gemäß Figur 7 für das Handgerät 14 übergeführt werden kann. In dieser Entnahmeposition 61 wird die Halterung 54 zur Aufnahme 49 des Handgerätes 14 und zur Fixierung zur Durchbrechung 52 ersichtlich. Die Halterung 54 für das Handgerät 14 ist nur beispielhaft und kann auf verschiedene Weisen durch lösbare Steck-, Klemm-, Rast- und/oder Bajonettverbindungen gelöst werden.

Diese Halterung 54 umgreift beispielsweise eine Grundplatte 63, die fest an der Unterseite der Aufnahme 49 angeordnet ist sowie eine Trägerplatte 64, welche schwenkbar zur Grundplatte 63 angeordnet ist, um durch eine Klemmung das an der Trägerplatte 64 angeordnete Handgerät 14 zur Grundplatte 63 zu positionieren und zu fixieren. Die Trägerplatte 64 weist hierfür Öffnungen 66 auf, die vorzugsweise schlüssellochförmig ausgebildet sind, wie aus den Figuren 9a und 9b hervorgeht. Dadurch ist ermöglicht, dass in den breiteren Abschnitt der Öffnung 66 die Auflageelemente 36 des Handgerätes 14 mit den seitlich daran angeordneten Befestigungselementen 41 einsetzbar sind, so dass diese Befestigungselemente 41 in die schmaleren Abschnitte der Öffnung 66 eingreifen und/oder diese hintergreifen. Bevorzugt kann der schmalere Abschnitt der Öffnung 66 auch konisch ausgebildet sein, so dass eine zusätzliche Zentrierung des Handgeräts 14 zu den Öffnungen 66 der Trägerplatte 64 ermöglicht ist. Nachdem das Handgerät 14 mit den Befestigungselementen 41 in die Öffnungen 66 der Trägerplatte 64 eingesetzt ist und eine untere Position eingenommen hat, wird die Trägerplatte 64 auf die Grundplatte 63 zu geschwenkt und mittels einem Fixierelement 67, wie beispielsweise einer Klemmung, Rasterung oder Verschraubung befestigt. Eine solche Position ist in Figur 5 dargestellt. Dabei ist das Handgerät 14, insbesondere die Längsachse des ersten Gehäuseabschnitts 30, exakt zur Durchgangsöffnung 52 ausgerichtet. Bevorzugt ist die Auflagefläche 37 des Handgerätes 14 bündig zur Oberfläche des Messtisches 48, so dass eine geschlossene Auflagefläche auf der Aufnahme 49 gebildet ist, um darauf aufliegend ein Messgegenstand 39 zu positionieren, wie dies beispielsweise in Figur 3 dargestellt ist. Alternativ kann das Austrittsfenster 31 beziehungsweise die Auflagefläche 37 gegenüber einer Auflagefläche des Messtisches 48 zurück versetzt sein.

Eine Entnahme des Handgerätes 14 erfolgt in umgekehrter Reihenfolge zu der zuvor beschriebenen Montage des Handgerätes 14 an der Halterung 54. Nach dem Überführen der Aufnahme 49 in die Entnahmeposition 61 kann die Fixierung 67, beispielsweise eine Verschraubung oder Klemmung, gelöst werden. Dabei löst sich die Trägerplatte 64 von der Grundplatte 63 durch eine Schwenkbewegung (Figur 7), so dass das Handgerät 14 mit den Auflageelementen 36 innerhalb der Öffnung 66 zunächst nach oben verfahren wird, bis die Befestigungselemente 41 in den breiteren Bereich der Öffnungen 66 gelangt sind, um das Handgerät 14 anschließend aus den Öffnungen 66 zu entnehmen.

Der Transportbehälter 12 kann des Weiteren zumindest ein Verstaufach 68 für einen weiteren Akkumulator 28 aufweisen. Vorteilhafterweise umfasst der Transportbehälter 12 selbst eine eigene Energieversorgung in Form eines wieder aufladbaren Akkumulators 28, durch welchen die in dem Transportbehälter 12 angeordneten und/oder angeschlossenen elektrischen Geräte aufgeladen werden können. Zusätzlich kann eine Anschlussleitung für einen Anschluss 70 (Figur 4) an ein öffentliches Stromnetz an dem Transportbehälter 12 vorgesehen sein, um eine Energieversorgung und/oder eine Aufladung der Akkumulatoren 28 zu ermöglichen.

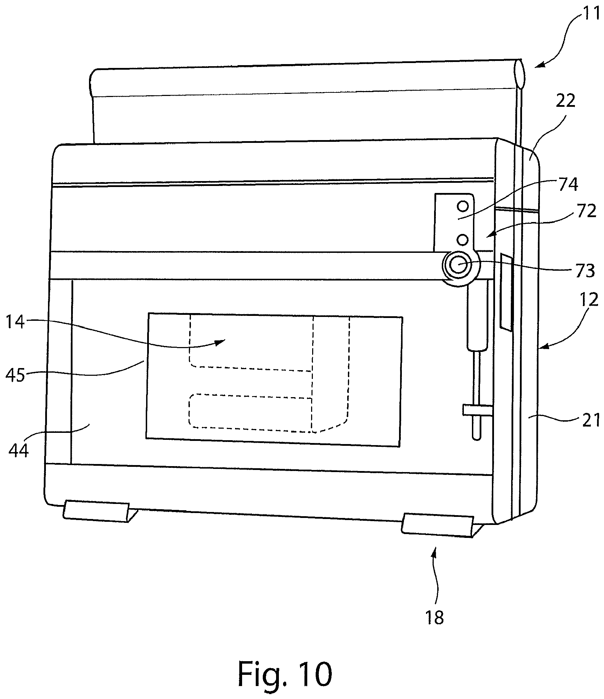

In Figur 10 ist eine schematische Teilansicht auf einen Transportbehälter 12 dargestellt, bei welchem das Display 16 beziehungsweise die Datenverarbeitungseinrichtung vollständig abgenommen ist. Dadurch ist ein Verriegelungsmechanismus 72 sichtbar, der vorzugsweise einen Zentralverschluss über das Schloss 73 umfasst. Ein Schieberiegel 74 des Verriegelungsmechanismus 72 ermöglicht einerseits eine Sicherung des Deckels 22 zum Unterteil 21 als auch eine Transportposition des Displays 16 beziehungsweise der Datenverarbeitungseinrichtung zum Transportbehälter 12. Dadurch ist eine Zugänglichkeit in den Innenraum des Transportbehälters 12 von außen nicht mehr möglich.

## Patentansprüche

1. Handgerät zur Röntgenfluoreszenzanalyse,
- mit einem Gehäuse (29) und einem Handgriff (25),
- mit einer in dem Gehäuse (29) angeordneten Röntgenfluoreszenzmesseinrichtung, die eine Strahlungsquelle umfasst, durch welche ein Primärstrahl durch ein Austrittsfenster (31) auf eine Messoberfläche (38) eines Messgegenstandes (39) gerichtet wird,
- mit einem im Gehäuse (29) angeordneten Detektor, der die von der Messoberfläche (38) des Messgegenstandes (39) emittierte Sekundärstrahlung erfasst,
- mit einer im Gehäuse (29) angeordneten Datenverarbeitungseinrichtung, welche zumindest eine an dem Gehäuse (29) vorgesehene oder damit verbundene Anzeige (19) ansteuert, wobei
- an einem stirnseitigen Ende eines ersten Gehäuseabschnitts (30) des Gehäuses (29) das Austrittsfenster (31) vorgesehen ist und diesem Austrittsfenster (31) zugeordnet zumindest ein Positionierelement (33) am ersten Gehäuseabschnitt (30) vorgesehen ist, und an dem ersten Gehäuseabschnitt (30) der Handgriff (25) vorgesehen ist,
- der erste Gehäuseabschnitt (30) und der Handgriff (25) pistolenförmig ausgebildet sind, und
- an zumindest einem weiteren Gehäuseabschnitt (32) des Gehäuses (29) beabstandet zum Austrittsfenster (31) am ersten Gehäuseabschnitt (30) zumindest ein Auflageelement (36) vorgesehen ist,
- dass ein Positionierelement (33) und zwei Auflageelemente (36) oder zwei Positionierelemente (33) und ein Auflageelement (36) eine Dreipunkt-Auflage bilden,
- wobei das zum Austrittsfenster (31) benachbarte oder an dieses angrenzende Positionierelement (33) als Auflagefläche (37) ausgebildet ist und die am weiteren Gehäuseabschnitt (32) angeordneten Auflageelemente (36) als Aufsetzfüße oder Aufsetzprismen ausgebildet sind,
- wobei das Handgerät (14) so ausgestaltet ist, dass es nach dem Aufsetzen auf die Messoberfläche (38) des Messgegenstandes (39) durch das zumindest eine Positionierelement (33) und das zumindest eine Auflageelement (36) zur Messoberfläche (38) ausgerichtet und selbständig in einer Messposition (57) zur Messoberfläche (38) positioniert ist und eine definierte Messposition auf dem Messgegenstand (39) durch das Handmessgerät ohne zusätzliche separate Hilfsmittel einnimmt, **dadurch gekennzeichnet, dass** der zumindest eine weitere Gehäuseabschnitt (32) mit dem ersten Gehäuseabschnitt (30) verbunden ist.

2. Handgerät nach Anspruch 1, **dadurch gekennzeichnet, dass** benachbart zu den Auflageelementen (36) oder an den Auflageelementen (36) Befestigungselemente (41) zur Fixierung des Handgerätes (14) an einer Aufnahme (49) oder einer Halterung (54) an der Aufnahme (49) eines Messtisches (48) vorgesehen sind.

3. Handgerät nach einem der vorhergehenden Ansprüche, **dadurch gekennzeichnet, dass** die Datenverarbeitungseinrichtung eine Funkschnittstelle zur kabellosen Kommunikation mit einer getrennt zum Handgerät vorgesehenen weiteren Datenverarbeitungseinrichtung ansteuert.

4. Handgerät nach einem der vorhergehenden Ansprüche, **dadurch gekennzeichnet, dass** die Datenverarbeitungseinrichtung im Handgerät (14) mittels einer Fernbedienung steuerbar ist.

## Claims

1. A handheld instrument for X-ray fluorescence analysis, including
- a housing (29) and a handle (25),
- an X-ray fluorescence measuring device disposed within the housing (29) and comprising a radiation source by which a primary beam is directed through an exit window (31) onto a measuring surface (38) of an object of measurement (39),
- a detector arranged within a housing (29) which detects the secondary radiation emitted by the measuring surface (38) of the object of measurement (39),
- a data processing device disposed within the housing (29) which activates at least one display device (19) provided on said housing (29) or connected therewith
- the exit window (31) being provided at a frontal end of a first housing portion (30) of the housing (29) and at least one positioning element (33), which is associated with this exit window (31), being provided on the first housing portion (30) and the handle (25) being provided on the first housing portion (30),
- the first housing portion (30) and the handle (25) being pistol-shaped, and
- at least one support element (36) being provided on at least one further housing portion (32) of the housing (29), which is spaced apart from the exit window (31) on the first housing portion (30),
- one positioning element (33) and two support elements (36) or two positioning elements (33) and one support element (36) forming a three-point support,
- the positioning element (33) adjacent to, or adjoining, the exit window (31) being realised as a support surface (37) and the support elements (36) disposed on the further housing portion (32) being realised as touchdown feet or touchdown prisms,
- the handheld instrument (14) being realised in such a manner that, due to the at least one positioning element (33) and to the at least one support element (36), it is aligned with the measuring surface (38) of the object of measurement (39) upon touchdown on said measuring surface (38) and is automatically positioned in a measuring position (57) with respect to the measuring surface (38), thus assuming a defined measuring position on the object of measurement (39) due to the shape of the handheld measuring instrument itself and without any additional, separate aids, **characterised in that** the at least one further housing portion (32) is connected to the first housing portion (30).

2. The handheld instrument as claimed in claim 1, **characterised in that** fasteners (41) for fastening the handheld instrument (14) on a retainer (49) of a measuring table (48), or on a mounting support (54) of said retainer (49), are provided adjacent to the support elements (36) or on said support elements (36).

3. The handheld instrument as claimed in any of the preceding claims, **characterised in that** the data processing device activates a radio interface for wireless communication with a further data processing device provided remotely from the handheld instrument.

4. The handheld instrument as claimed in any of the preceding claims, **characterised in that** the data processing device present in the handheld instrument (14) may be controlled by means of a remote control.

## Revendications

1. Appareil portatif destiné à réaliser une analyse par fluorescence X, pourvu
- d'un boîtier (29) et d'une poignée (25),
- d'un dispositif de mesure par fluorescence X qui est disposé dans le boîtier (29) et comprend une source de rayonnement grâce à laquelle un faisceau primaire est dirigé, à travers une fenêtre de sortie (31), sur une surface de mesure (38) d'un objet de mesure (39),
- d'un détecteur qui est disposé dans le boîtier (29) et saisit le rayonnement secondaire émis par la surface de mesure (38) de l'objet de mesure (39),
- d'un dispositif de traitement de données qui est disposé dans le boîtier (29) et active au moins un affichage (19) prévu dans ledit boîtier (29) ou relié à celui-ci,
- la fenêtre de sortie (31) étant prévue à une extrémité frontale d'une première partie de boîtier (30) du boîtier (29) et au moins un élément de positionnement (33), affecté à ladite fenêtre de sortie (31), étant prévu sur la première partie de boîtier (30) et la poignée (25) étant prévue sur ladite première partie de boîtier (30),
- la première partie de boîtier (30) et la poignée (25) étant réalisées en forme de pistolet, et
- au moins un élément d'appui (36) étant prévu sur au moins une autre partie de boîtier (32) du boîtier (29), et ce à une distance donnée de la fenêtre de sortie (31) située sur la première partie de boîtier (30),
- un élément de positionnement (33) et deux éléments d'appui (36) ou deux éléments de positionnement (33) et un élément d'appui (36) formant un appui sur trois points,
- l'élément de positionnement (33) contigu à la fenêtre de sortie (31) ou adjacent à celle-ci étant réalisé en tant que surface d'appui (37) et les éléments d'appui (36) disposés sur l'autre partie de boîtier (32) étant réalisés en tant que pieds de mise en contact ou prismes de mise en contact,
- l'appareil portatif (14) étant réalisé de telle sorte que, après avoir été posé sur la surface de mesure (38) de l'objet de mesure (39), il est dirigé vers la surface de mesure (38) par ledit au moins un élément de positionnement (33) et ledit au moins un élément d'appui (36), et est positionné de manière autonome dans une position de mesure (57) par rapport à la surface de mesure (38) et prend une position de mesure définie sur l'objet de mesure (39) grâce à l'appareil de mesure portatif sans moyens auxiliaires séparés supplémentaires, **caractérisé en ce que** ladite au moins une autre partie de boîtier (32) est assemblée à la première partie de boîtier (30).

2. Appareil portatif selon la revendication 1, **caractérisé en ce que** de manière contiguë aux éléments d'appui (36) ou sur lesdits éléments d'appui (36) sont prévus des éléments de fixation (41) destinés à fixer l'appareil portatif (14) à une réception (49) au niveau d'une table de mesure (48) ou à un élément de maintien (54) prévu sur ladite réception (49).

3. Appareil portatif selon l'une quelconque des revendications précédentes, **caractérisé en ce que** le dispositif de traitement de données active une interface radio permettant la communication sans fils avec un autre dispositif de traitement de données prévu de manière séparée par rapport audit appareil portatif.

4. Appareil portatif selon l'une quelconque des revendications précédentes, **caractérisé en ce que** le dispositif de traitement de données situé dans l'appareil portatif (14) peut être commandé au moyen d'une télécommande.
